# EUROPEAN PATENT SPECIFICATION

(11) **EP 2 699 801 B1**
(45) Date of publication and mention of the grant of the patent: **15.11.2017**
(21) Application number: 12724716.1
(22) Date of filing: 19.04.2012
(51) Int. Cl.: F04B 43/04, G09B 21/00, H01F 7/06

(54) **A MAGNETIC ACTUATOR HAVING A NANOCOMPOSITE MEMBRANE**
MAGNETISCHER BETÄTIGER MIT EINER NANOKOMPOSITMEMBRAN
VÉRIN MAGNÉTIQUE COMPORTANT UNE MEMBRANE NANOCOMPOSITE

(30) Priority: 20.04.2011 IT TO20110347
(43) Date of publication of application: 26.02.2014
(73) Proprietor: Fondazione Istituto Italiano Di Tecnologia, 16163 Genova (IT)
(72) Inventor: ATHANASIOU, Athanasia, I-16014 Ceranesi (Genova) (IT); DE VITTORIO, Massimo, I-73100 Lecce (IT); FRAGOULI, Despina, I-16149 Genova (IT); PETRONI, Simona, I-73016 San Cesario di Lecce (Lecce) (IT); NANNI, Gabriele, I-16162 Genova (IT); AMATO, Massimiliano, I-70124 Bari (IT); LORENZO, Daniela, I-73047 Monteroni di Lecce (Lecce) (IT); CINGOLANI, Roberto, I-16014 Ceranesi (Genova) (IT)
(74) Representative: Vanzini, Christian
(86) International application number: PCT/IB2012/051976
(87) International publication number: WO 2012/143887

(56) References cited:
- WO-A1-2011/020600
- WO-A2-2008/106928
- JP-A- 3 129 386
- US-A1- 2006 012 576

## Description

The present invention relates generally to a magnetic actuator, comprising
a substrate,
a membrane layer directly or indirectly applied on a surface of the substrate, said membrane layer consisting of a matrix of elastic polymer material, in which nanoparticles of magnetic material, capable of undergoing a dynamic effect under the action of a magnetic field, are dispersed, and
generator means suitable for producing a magnetic field acting on the membrane layer.

Sensor and actuator devices are known, which are provided with polymeric membranes.

Generally, the use of electro-active polymers (EAP) allows producing membranes capable of operating as actuator or sensor element. Among such polymers, those activated by a field, such as the dielectric elastomers and the piezoelectric materials, generate high actuation forces, but they need high actuation voltages (Yoseph Bar-Cohen, "Electroactive polymers for refreshable Braille displays", Industrial Sensing & Measurement, September 11, 2009, SPIE Newsroom); on the other hand, ionic EAP materials (conductive polymers and ionic polymer-metal composites) are attractive due to their low actuation voltage, but the generated force is low. In the EAP approach, two problems have not yet been solved: a low voltage and a high actuation force are not compatible, and the life cycle of the polymers is too short.

Thermal-pneumatic membranes have been produced in elastic polymer material, in particular, polydimethylsiloxane (PDMS), for Braille display applications (Hyuk-Jun Kwon, Seok Woo Lee, Lee, S.S., "Braille code display device with a PDMS membrane and thermopneumatic actuator", Micro Electro Mechanical Systems, 2008. MEMS 2008. IEEE 21st International Conference on), but such architecture requires a resistive heater to convert a liquid flowing within a cavity into a vapour and generate such a high pressure as to deflect a hanging membrane. The presence of high temperatures and vapours is a clear drawback of such an actuation mechanism. Furthermore, the response time required in order to reach the maximum deflection is higher than 10 seconds (Hyuk-Jun Kwon, Seok Woo Lee, Seung S. Lee, "Braille dot display module with a PDMS membrane driven by a thermopneumatic actuator", Sensors and Actuators A, 154 (2009) 238-246).

In the magnetic actuation field, the known solutions generally exploit a PDMS membrane carrying a micromagnet (J. Streque, A. Talbi, P. Pernod, V. Preobrazhensky, "New Magnetic Microactuator Design Based on PDMS Elastomer and MEMS Technologies for Tactile Display", IEEE Transactions on haptics, Vol. 3, No. 2, April-June 2010; M. Benali-Khoudja, M. Hafez, and A. Kheddar, "VITAL: An Electromagnetic Integrated Tactile Display", Displays, vol. 28, no. 3, pp. 133-144, April 2007). The main drawback of such solutions is due to the adhesion between the rigid material and the flexible membrane, which is not complete, and often requires special arrangements and mechanic stops in order not to collapse on the magnetic generator. Furthermore, to avoid possible failures, due to their mutual attraction, the permanent magnet and the microgenerator are very spaced apart, thus determining an increase in the final dimensions of the device.

Publication WO 2008/106928 discloses a device of the type defined in the beginning, in which an electromagnet is positioned above the membrane to implement a pump or a switch. When the membrane is still in a viscous form, microcoils are used in order to cause a thickening and alignment of the nanoparticles in preset sites of the membrane. Once hardened, the membrane is attached to a substrate. The solution described in WO 2008/106928 determines a relative compactness of the device, since the magnetically active component is incorporated in the polymeric membrane.

JP 3 129386 A discloses a magnetic actuator comprising
a substrate,
a support layer indirectly deposited on a surface of the substrate,
a membrane layer supported by the support layer, said membrane layer consisting of a matrix of elastic polymer material in which a magnetic material, capable of undergoing a dynamic effect under the action of a magnetic field, is dispersed, and
generator means for producing a magnetic field acting on the membrane layer, said generator means comprising at least one magnetic field generator directly arranged on said surface of the substrate.

US 2006/012576 A1 discloses a magnetic actuator comprising
a substrate,
a support layer arranged on a surface of the substrate,
a layer supported by the support layer, said layer comprising a portion of magnetic material, capable of undergoing a dynamic effect under the action of a magnetic field, and
generator means for producing a magnetic field acting on the membrane layer, said generator means comprising at least one magnetic field generator directly arranged on said surface of the substrate,
wherein said support layer has at least one cavity inside which said generator is arranged, said portion hanging over said cavity.

An object of the invention is to provide a magnetic actuator, which allows a further integration of the components, and therefore which allows achieving a higher compactness of the device, as well as a better yield.

With a view to such aim, it is the object of the invention an actuator according to claim 1.

According to such idea of solution, the whole actuator can be produced by the thin film deposition and processing technologies, thus allowing obtaining a higher compactness and a better yield compared to the known solutions.

Furthermore, it is the object of the invention a method for producing a magnetic actuator, comprising the following steps:
providing a substrate,
depositing a support layer directly or indirectly on a surface of the substrate,
applying on the support layer a membrane layer consisting of a matrix of polymer material, in which nanoparticles of magnetic material, capable of undergoing a dynamic effect under the action of a magnetic field, are dispersed, and
applying generator means suitable for producing a magnetic field, in which said applying generator means comprises directly or indirectly forming at least one magnetic field generator on said surface of the substrate, before applying the membrane layer,
wherein in said support layer at least one cavity is formed, inside which said generator is arranged, said membrane layer having a membrane portion hanging over said cavity.

Further characteristics and advantages of the actuator according to the invention will be apparent from the following detailed description, provided with reference to the annexed drawings, given by way of non-limiting example only, in which:
- Figs. 1 to 5 are schematic drawings illustrating corresponding operative steps of a method for producing a magnetic actuator according to the invention;
- Figs. 6a and 6b are photographs representing nanoparticles disperses in a fluid polymeric matrix, respectively before and after the application of an external magnetic field;
- Fig. 7 is a graph setting forth electro-optical measurements that are indicative of the deflection of a membrane incorporating magnetic nanoparticles, as a function of the intensity of an external magnetic field; and
- Figs. 8a and 8b are photographs of a membrane incorporating magnetic nanoparticles, under a deflection due to the action of external magnetic fields having different intensity.

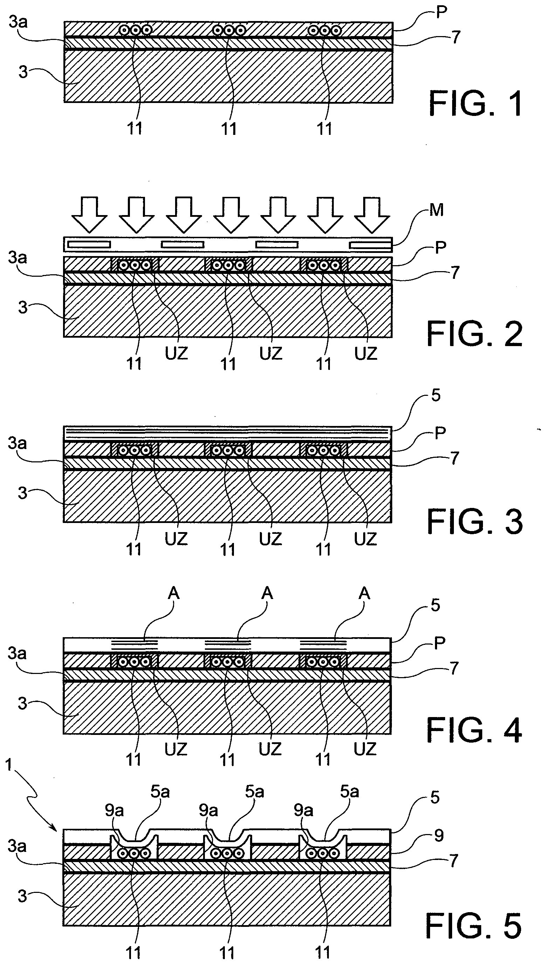

With reference to the Fig. 5, a magnetic actuator is schematically represented and indicated by 1.

Such an actuator comprises a substrate 3 and a membrane layer 5 directly or indirectly deposited on a surface 3a of the substrate 3.

The substrate 3 is, for example, in doped n-type silicon having a low resistivity.

In the illustrated example, the membrane layer 5 is indirectly deposited on the surface 3a of the substrate 3, i.e., further materials forming intermediate layers are interposed between it and the substrate 3, particularly, an insulating layer 7 and a support layer 9, which will be described in more detail herein below.

According to further non-illustrated implementation modes, the membrane layer could be directly deposited on the substrate, i.e., without further layers of material interposed between it and the substrate.

The membrane layer 5 consists of a matrix of elastic polymer material, in particular, polydimethylsiloxane (PDMS), in which nanoparticles of magnetic material, capable of undergoing a dynamic effect under the action of a magnetic field, are dispersed. To the aims of the present invention, by nanoparticles are meant particles having dimensions lower than 1 µm, as small as a few nanometers. Such nanoparticles can be of paramagnetic or ferromagnetic material. In order to preserve the polymer elasticity, the wt. concentration of the particles is kept at a low level, of the order of a few percentage points.

The actuator 1 further comprises generator means suitable for producing a magnetic field acting on the membrane layer 5, which comprise at least one magnetic field generator 11 directly or indirectly arranged on the surface 3a of the substrate 3. In the illustrated example, said at least one generator is interposed between the substrate 3 and the membrane layer 5.

In the illustrated example, there is a plurality of such magnetic field generators 11, which are positioned on the substrate 3 according to an ordered arrangement. Each generator 11 is capable of being connected to an external electric supply source, through conductor means (not illustrated) obtained on the substrate 3.

According to an implementation mode of the invention, the generator (each generator) 11 is a planar generator, particularly a microcoil.

The generator 11 is produced particularly by a thin film deposition and processing technology. A technique to produce a planar microcoil is, for example, disclosed in US 7 791 440.

An implementation of the device architecture can provide for manufacturing non-planar micromagnetic field generators, being manufactured by multi-layer manufacturing techniques (T. Kohlmeier et al., "An investigation on technologies to fabricate microcoils for miniaturized actuator systems", Microsystem Technologies, Volume 10, Number 3, 175-181, 2004), or by winding a conducting wire around a columnar support (K. Kratt et al., "A fully MEMS-compatible process for 3D high aspect ratio micro coils obtained with an automatic wire bonder", J. Micromech. Microeng. 20 (2010) 015021). In fact, non-planar microgenerators allow increasing the maximum intensity of the magnetic field produced.

In the illustrated example, the generators 11 are indirectly arranged on the surface 3a of the substrate 3, i.e., the insulating layer 7 is interposed between them and the substrate 3.

According to further not-shown implementation modes, the generators could be directly arranged on the substrate, that is, without further layers of material interposed between them and the substrate. According to other implementation modes, the generators could be arranged within the substrate, for example, formed within it, or produced separately and subsequently inserted.

The actuator 1 further comprises a support layer 9 directly or indirectly deposited on the surface 3a of the substrate 3. The support layer 9 has at least one cavity 9a inside which the planar generator 11 is arranged. The membrane layer 5 is supported by the support layer 9, and therefore has a membrane portion 5a hanging over the cavity 9a.

The support layer 9 is of a material which allows being machined in order to obtain a preset pattern for positioning the cavity/cavities. Such material can be, for example, a photoresist, such as SU-8.

In the illustrated example, in the support layer 9 there is a plurality of cavities 9a, within each of which a corresponding magnetic field generator 11 is arranged, and, consequently, there are a plurality of portions 5a, each hanging over a corresponding one of the cavities 9a.

In the illustrated example, the support layer 9 is indirectly deposited on the surface 3a of the substrate 3, i.e., the insulating layer 7 is interposed between it and the substrate 3. According to further non-shown implementation modes, the support layer could be directly deposited on the substrate, i.e., without further layers of material interposed between it and the substrate. In this case, the cavities receiving the generators could be directly obtained on the substrate.

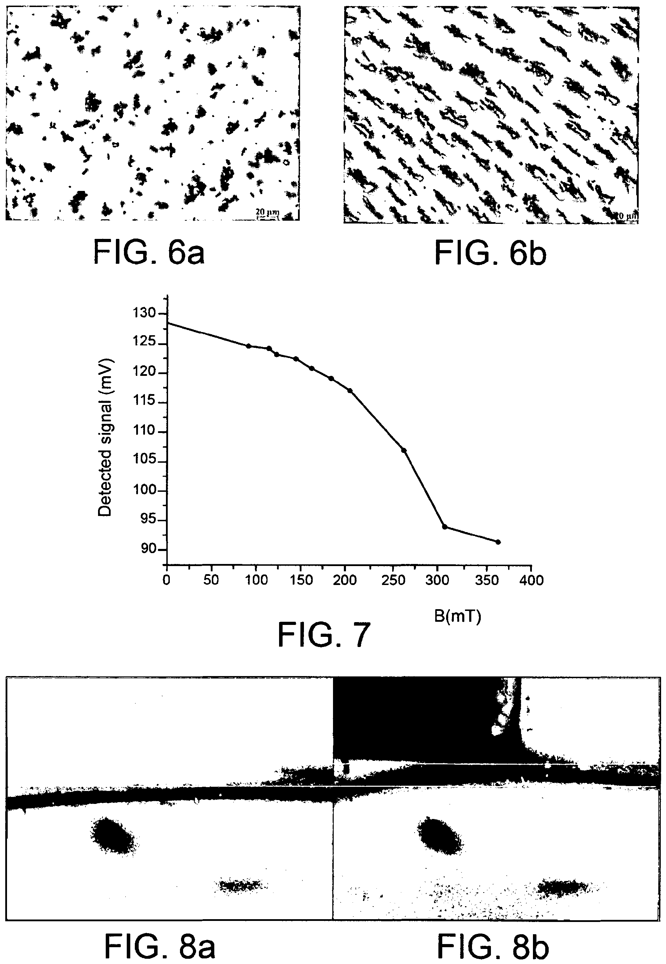

Preferably, the magnetic nanoparticles dispersed in the membrane layer 5 are gathered at the membrane portions 5a and, beside having a coinciding orientation, are gathered in columnar structures (Fig. 6b). This allows increasing the magnetic responsivity of the membrane. The alignment and the higher density of the nanoparticles in the membrane portions are obtained by applying an external magnetic field during the manufacturing of the actuator, in the manner that will be described in more detail herein below. In the Figures 6a and 6b, photographs of the nanoparticles embedded in the polymeric matrix are illustrated, with a random dispersion, and with an alignment induced by an external magnetic field, respectively.

The alignment of the nanoparticles in the polymeric matrix introduces a magnetic anisotropy (Fragouli D., Buonsanti R., Bertoni G., Sangregorio C., Innocenti C., Falqui A., Gatteschi D., Cozzoli P.D., Athanassiou A., Cingolani R., "Dynamical Formation of Spatially Localized Arrays of Aligned Nanowires in Plastic Films with Magnetic Anisotropy", ACS Nano. 2010 Apr. 27; 4(4): 1873-8).

Furthermore, preliminary results of measurements carried out on nanocomposite membranes show that the dispersion of the nanoparticles in the PDMS matrix alters their Young's modulus; in particular, some results highlight a decrease thereof, and an improvement in elasticity (Pirmoradi et al., "A magnetic poly(dimethylesiloxane) composite membrane incorporated with uniformly dispersed, coated iron oxide nanoparticles", Journal of Micromechanics and Microengineering, 20 015032); to that, it follows a higher deflection efficiency, that is, relevant deflections, also with weak magnetic fields.

Furthermore, due to the fact that the microgenerators are integrated within the actuator, it is possible to have them arranged in positions that are closer to the corresponding membrane portions; this may concur to the flexural efficiency of the device also for low concentration of nanoparticles in the membrane, and anyhow lower than those employed in the known devices (WO 2008/106928; Jiaxing Li, Mengying Zhang, Limu Wang, Weihua Li, Ping Sheng, Weijia Wen, "Design and fabrication of microfluidic mixer from carbonyl iron-PDMS composite membrane", Microfluidics and nanofluidics (October 11, 2010), pags. 1-7; F. Fahrni, M.W.J. Prins and L.J. van Ijzendoorn, "Magnetization and actuation of polymeric microstructures with magnetic nanoparticles for application in microfluidics", Journal of Magnetism and Magnetic Materials, Vol. 321, No. 12, pags. 1843-1850, June 2009).

The membrane portions 5a incorporating the magnetic nanoparticles and hanging over the microcoils 11 can be mechanically actuated by a magnetic field. If no voltage is applied to the microcoils, the membrane portions remain in a rest position. If a voltage is applied, the magnetic force generated attracts or repels the nanoparticles towards the microcoils or to the opposite direction, according to the magnetic nature nanoparticles; therefore, it deflects the membrane portions 5a, as illustrated in Fig. 5. The membrane portions come back to the rest position when the electric supply is discontinued. If generators are used, which have micrometer cross-sectional dimensions, such as microcoils, it is possible to obtain a high spatial density of the generators, therefore to produce even complex deformation patterns.

A method for producing a magnetic actuator according to the invention substantially comprises the following steps:
providing a substrate,
depositing a support layer directly or indirectly on a surface of the substrate,
applying on the support layer a membrane layer consisting of a matrix of polymer material, in which nanoparticles of magnetic material, capable of undergoing a dynamic effect under the action of a magnetic field, are dispersed, and
applying generator means suitable for producing a magnetic field, wherein said applying generator means comprises forming at least one magnetic field generator, directly or indirectly on said surface of the substrate, before applying the membrane layer,
wherein in said support layer at least one cavity is formed, inside which said generator is arranged, said membrane layer having a membrane portion hanging over said cavity.

In the Figures 1 and 5, an implementation example of the above-mentioned method is illustrated.

With reference to Fig. 1, on the substrate 3, one surface 3a of which is coated with an insulating layer 7, an array of micromagnetic field generators 11 is produced, in particular, planar microcoils. The constructive parameters of such microcoils (shape, thickness-width ratio, distance between coils, density of input current) are determined as a function of the characteristics of the desired magnetic field. Such array is coated with a photoresist layer, indicated with P in Fig. 1.

With reference to Fig. 2, through a mask M overlapping the photoresist layer P and having a coating pattern corresponding to the ordered arrangement of microcoils, the photoresist is irradiated with ultraviolet radiation. The areas that are not exposed to the ultraviolet radiation are indicated with UZ in Fig. 2. Once the device is complete, the photoresist layer P is intended to form the support layer 9 for the membrane layer 5.

With reference to Fig. 3, the membrane layer 5 incorporating the dispersed magnetic particles is deposited in a viscous form on the photo-treated photoresist layer P.

With reference to Fig. 4, the microcoils 11 area activated in order to modify the distribution and align the nanoparticles within the membrane layer 5, by they magnetic field that they create and acting on the membrane layer in a fluid condition. In fact, in such a condition, the viscosity of the polymer is low enough to allow a restricted movement of the particles with respect to the polymeric matrix. In this manner, the magnetic nanoparticles dispersed in the membrane layer 5 tend to gather at areas of the membrane layer A arranged above the microcoils 11 and to align according to the magnetic field. Once the desired configuration in terms of distribution and alignment of the nanoparticles has been reached, the microcoils 11 are inactivated, and the membrane layer 5 is immediately subjected to a hardening treatment (baking).

With reference to Fig. 5, the photoresist layer P is developed; consequently, the portions UZ which are not exposed to the ultraviolet radiation and used as a sacrificial layer are removed in order to create the cavities 9a, thereby clearing the membrane portions 5a arranged above the microcoils 11, approximately coinciding with the areas of the membrane layer A in which the magnetic nanoparticles have been previously aligned and gathered.

The inventors carried out experimental tests to study the feasibility of the alignment of the magnetic nanoparticles in a PDMS matrix before the baking thereof, by using a 25 mT magnetic field generated by an electromagnet. The results have been satisfactory and have shown the feasibility of such operation.

In order to evaluate the deflexion of the membrane under the action of an external magnetic field, the following measurement apparatus has been implemented. The PDMS nanocomposite membrane has been secured under a permanent magnet, the distance of which from the membrane could be varied by using a micrometer screw. The magnetic field has been characterized as a function of the distance from the magnet, by using a gauss-O-meter. A beam emitted by a He-Ne laser has been passed between the upper surface of the membrane and the magnet, and the transmitted intensity has been detected with a photodiode. Two mirrors with a kinematic support have been used to allow an optimal alignment of the light beam, the diameter of which could further be reduced by an iris diaphragm in order to ensure the integrity of the beam passing between magnet and membrane.

Since the laser beam is parallel and grazing with respect to the membrane surface, the transmitted intensity decreases when the membrane is activated by the external magnetic field and intercepts the laser beam. Consequently, the detected variation in the intensity can constitute a qualitative measurement for the membrane deflection. In Fig. 7, the variation of the signal detected by the photodiode is reported as a function of the magnetic field. From this Figure, it is inferred that the signal detected by the photodiode decreases, therefore the membrane deflection increases, when the applied magnetic field increases.

The membrane deflection following the displacement of the permanent magnet has been taken by means of a video camera. In Figs. 8a and 8b, two photograms of the video at two different distances of the magnet from the membrane (therefore, with different intensities of magnetic field applied on the membrane) are reported: as it can be noticed, by moving the magnet towards the membrane upper surface (therefore, increasing the intensity of the applied magnetic field), there is a progressive displacement from the rest position (represented by the bottom light-coloured line in Figs. 8a and 8b).

The present invention can be applied, for example, to the production of tactile displays, to the manufacturing of micro-fluidic devices to pump or adjust fluid flows by means of a magnetic field, to the production of earphones and loudspeakers, or to the manufacturing of anti-counterfeit magnetic identification (ID) markers.

## Claims

1. A magnetic actuator (1) comprising
a substrate (3),
a support layer (9) directly or indirectly deposited on a surface (3a) of the substrate,
a membrane layer (5) supported by the support layer (9), said membrane layer consisting of a matrix of elastic polymer material in which nanoparticles of magnetic material, capable of undergoing a dynamic effect under the action of a magnetic field, are dispersed, and
generator means for producing a magnetic field acting on the membrane layer (5), said generator means comprising at least one magnetic field generator (11) directly or indirectly arranged on said surface of the substrate,
wherein said support layer has at least one cavity (9a) inside which said generator is arranged, said membrane layer having a membrane portion (5a) hanging over said cavity.

2. An actuator according to claim 1, wherein said at least one generator is a planar generator, in particular a microcoil.

3. An actuator according to claim 1, wherein said at least one generator is a three-dimensional generator.

4. An actuator according to claim 2 or 3, comprising a plurality of said generators arranged in an ordered arrangement.

5. A method for producing a magnetic actuator (1), comprising the following steps:
providing a substrate (3),
depositing a support layer (9) directly or indirectly on a surface (3a) of the substrate,
applying on the support layer (9) a membrane layer (5) consisting of a matrix of polymer material, in which nanoparticles of magnetic material, capable of undergoing a dynamic effect under the action of a magnetic field, are dispersed, and
applying generator means for producing a magnetic field, wherein said applying generator means comprises forming at least one magnetic field generator (11), directly or indirectly on said surface of the substrate, before applying the membrane layer (5),
wherein in said support layer at least one cavity (9a) is formed, inside which said generator is arranged, said membrane layer having a membrane portion (5a) hanging over said cavity.

6. A method according to claim 5, wherein the membrane layer (5) is deposited in viscous state, and then subjected to a hardening treatment.

7. A method according to claim 6, wherein, before subjecting the membrane layer (5) to the hardening treatment, said at least one generator (11) is energized for modifying distribution and/or orientation of said nanoparticles within the membrane layer (5).

8. A method according to claim 6 or 7,
wherein, after forming said at least one generator (11), a support layer (P, 9) is directly or indirectly deposited on said surface of the substrate, in such a way as to cover said at least one generator,
wherein said membrane layer is applied directly on said support layer,
and wherein, after the hardening treatment, said support layer is selectively removed for forming at least one cavity (9a) at said at least one generator, over which said membrane has a hanging membrane portion (5a).

## Patentansprüche

1. Magnetischer Betätiger (1) mit
einem Substrat (3),
einer Trägerschicht (9), die direkt oder indirekt auf einer Oberfläche (3a) des Substrats aufgebracht ist,
einer Membranschicht (5), die von der Trägerschicht (9) abgestützt wird, wobei die Membranschicht (5) aus einer Matrix aus elastischem Polymermaterial gebildet ist, in dem Nanopartikel eines magnetischen Materials verteilt sind, die in der Lage sind, unter dem Einfluss eines Magnetfelds eine dynamische Wirkung zu erfahren, und
einem Generatormittel zum Erzeugen eines Magnetfelds, das auf die Membranschicht (5) wirkt, wobei das Generatormittel mindestens einen Magnetfeldgenerator (11) aufweist, der direkt oder indirekt auf der Oberfläche des Substrats angeordnet ist, wobei
die Trägerschicht mindestens einen Hohlraum (9a) aufweist, in dem der Generator angeordnet ist, und die Membranschicht einen Membranbereich (5a) aufweist, der über dem Hohlraum hängt.

2. Magnetischer Betätiger nach Anspruch 1, bei dem der mindestens eine Generator ein planarer Generator ist, insbesondere eine Mikrospule.

3. Magnetischer Betätiger nach Anspruch 1, bei dem der mindestens eine Generator ein dreidimensionaler Generator ist.

4. Magnetischer Betätiger nach Anspruch 2 oder 3, ferner mit einer Mehrzahl von Generatoren, die in einer geordneten Anordnung angeordnet sind.

5. Verfahren zum Erzeugen eines magnetischen Betätigers (1), mit den folgenden Schritten:
Bereitstellen eines Substrats (3),
Aufbringen einer Trägerschicht (9) direkt oder indirekt auf eine Oberfläche (3a) des Substrats,
Applizieren, auf die Trägerschicht (9), einer Membranschicht (5), die aus einer Matrix aus einem Polymermaterial gebildet ist, in dem Nanopartikel eines magnetischen Materials verteilt sind, die ist in der Lage sind, unter dem Einfluss eines Magnetfelds eine dynamische Wirkung zu erfahren, und
Verwenden eines Generatormittels zum Erzeugen eines Magnetfelds, wobei das Verwenden des Generatormittels ein Bilden von mindestens einem Magnetfeldgenerator (11) aufweist, direkt oder indirekt auf der Oberfläche der Struktur, bevor die Membranschicht (5) appliziert wird,
wobei mindestens ein Hohlraum (9a) in der Trägerschicht gebildet wird, in dem der Generator angeordnet wird, wobei die Membranschicht einen Membranbereich (5a) aufweist, der über dem Hohlraum hängt.

6. Verfahren nach Anspruch 5, bei dem Membranschicht (5) in viskosem Zustand aufgebracht und dann einer Aushärtebehandlung unterzogen wird.

7. Verfahren nach Anspruch 6, bei dem, bevor die Membranschicht (5) der Aushärtebehandlung unterzogen wird, der mindestens eine Generator (11) energetisiert wird zur Modifizierung der Verteilung und/oder Orientierung der Nanopartikel innerhalb der Membranschicht (5).

8. Verfahren nach Anspruch 6 oder 7, bei dem, nach der Bildung des mindestens einen Generators (11), die Trägerschicht (P, 9) direkt oder indirekt auf die Oberfläche des Substrats in einer derartigen Art und Weise aufgebracht wird, dass der mindestens eine Generator bedeckt wird,
die Membranschicht direkt auf die Trägerschicht appliziert wird, und
nach der Aushärtebehandlung die Trägerschicht selektiv entfernt wird, um mindestens einen Hohlraum (9a) an dem mindestens einen Generator zu bilden, über dem die Membran einen hängenden Membranbereich (5a) aufweist.

## Revendications

1. Vérin magnétique (1) comprenant
un substrat (3),
une couche support (9) déposée directement ou indirectement sur une surface (3a) du substrat,
une couche membrane (5) supportée par la couche support (9), ladite couche membrane constituée d'une matrice d'un matériau polymère élastique dans lequel des nanoparticules de matière magnétique, capables de subir un effet dynamique sous l'action d'un champ magnétique, sont dispersées, et
un moyen générateur pour produire un champ magnétique agissant sur la couche membrane (5), ledit moyen générateur comprenant au moins un générateur de champ magnétique (11) agencé directement ou indirectement sur ladite surface du substrat,
dans lequel ladite couche support a au moins une cavité (9a) à l'intérieur de laquelle ledit générateur est agencé, ladite couche membrane ayant une partie de membrane (5a) suspendue au-dessus de ladite cavité.

2. Vérin selon la revendication 1, dans lequel ledit au moins un générateur est un générateur plan, en particulier une microbobine.

3. Vérin selon la revendication 1, dans lequel ledit au moins un générateur est un générateur tridimensionnel.

4. Vérin selon la revendication 2 ou 3, comprenant une pluralité desdits générateurs agencée selon un agencement ordonné.

5. Procédé pour produire un vérin magnétique (1), comprenant les étapes suivantes :
la fourniture d'un substrat (3),
le dépôt d'une couche support (9) directement ou indirectement sur une surface (3a) du substrat,
l'application sur la couche support (9) d'une couche membrane (5) constituée d'une matrice de matériau polymère, dans lequel des nanoparticules de matière magnétique, capables de subir un effet dynamique sous l'action d'un champ magnétique, sont dispersées, et
l'application d'un moyen générateur pour produire un champ magnétique, dans lequel ladite application du moyen générateur comprend la formation d'au moins un générateur de champ magnétique (11), directement ou indirectement sur ladite surface du substrat, avant l'application de la couche membrane (5),
dans lequel, dans ladite couche support est formée au moins une cavité (9a) à l'intérieur de laquelle ledit générateur est agencé, ladite couche membrane ayant une partie de membrane (5a) suspendue au-dessus de ladite cavité.

6. Procédé selon la revendication 5, dans lequel la couche membrane (5) est déposée dans un état visqueux et, ensuite, soumise à un traitement de durcissement.

7. Procédé selon la revendication 6, dans lequel, avant la soumission de la couche membrane (5) au traitement de durcissement, ledit au moins un générateur (11) est alimenté pour modifier la distribution et/ou l'orientation desdites nanoparticules à l'intérieur de la couche membrane (5).

8. Procédé selon la revendication 6 ou 7,
dans lequel, après la formation dudit au moins un générateur (11), une couche support (P, 9) est directement ou indirectement déposée sur ladite surface du substrat d'une manière à recouvrir ledit au moins un générateur,
dans lequel ladite couche membrane est appliquée directement sur ladite couche support,
et dans lequel, après le traitement de durcissement, ladite couche support est supprimée de manière sélective pour former au moins une cavité (9a), au niveau dudit au moins un générateur, au-dessus de laquelle ladite membrane a une partie de membrane suspendue (5a).
